# EUROPEAN PATENT SPECIFICATION

(11) **EP 1 323 035 B1**
(45) Date of publication and mention of the grant of the patent: **14.11.2007**
(21) Application number: 00966958.1
(22) Date of filing: 27.09.2000
(51) Int. Cl.: G06F 9/445, G11B 20/00

(54) **METHOD AND APPARATUS FOR SECURE AUTOMATIC PLAYBACK OF CONTENT FROM REMOVABLE MASS STORAGE MEDIA**
VERFAHREN UND GERÄT ZUR SICHEREN, AUTOMATISCHEN WIEDERGABE DES INHALTES VON AUSWECHSELBAREN MASSENSPEICHERMEDIEN
PROCEDE ET APPAREIL DE LECTURE AUTOMATIQUE SECURISEE D'UN CONTENU A PARTIR DE SUPPORTS DE MEMOIRE DE GRANDE CAPACITE AMOVIBLES

(30) Priority: 18.10.1999 US 420186
(43) Date of publication of application: 02.07.2003
(73) Proprietor: INTEL CORPORATION, Santa Clara, CA 95052-8119 (US)
(72) Inventor: KALBAG, Sameer, S., Hillsboro, OR 97124 (US); TRAW, Brendan, S., Portland, OR 97229 (US)
(74) Representative: Molyneaux, Martyn William
(86) International application number: PCT/US2000/026557
(87) International publication number: WO 2001/029660

(56) References cited:
- EP-A- 0 699 995
- EP-A- 0 756 287
- EP-A- 0 817 195
- WO-A-97/02552
- US-A- 5 222 134
- US-A- 5 721 951
- US-A- 6 117 186

## Description

### BACKGROUND

### 1. FIELD

The present invention relates generally to multimedia in computer and consumer electronics systems and, more specifically, to authoring and playing of multimedia data streams.

### 2. DESCRIPTION

The widespread deployment of removable, large capacity, storage media such as digital versatile disk (DVD) read only memories (ROM) (for use with DVD-ROM drives) enables consumption of high quality digital content on a personal computer (PC) system or a consumer electronics (CE) device. A DVD uses optical disk storage technology to provide more storage than conventional floppy disks or compact disk read only memories (CD-ROMs). While providing authors greater flexibility in creating content due to the expanded storage, this new medium also exhibits several deficiencies for the PC environment. These deficiencies include poor ease of use, lack of customization features, and security problems.

Playback of content stored on a DVD on a PC is a relatively complex process compared to playback on a CE device (e.g., a dedicated DVD player). The user must first purchase or download player application software for the particular storage medium used (e.g., for a DVD). The user must then install the player application onto the user's PC. This installation may involve storing the player in the PC's memory, configuring the player according to the characteristics of the user's PC, and possibly rebooting the PC. Even after installation of the player, additional specific components may need to be obtained and installed before playback of the DVD content is possible. These components may include certain coder/decoder modules (e.g., codecs), software "plug-ins", or other ancillary programs. As is evident, this process may require some detailed technical knowledge and skill working with computers. For many users, this process is intimidating. This complexity and additional work detracts from the user's entertainment experience and can have a negative impact on the brand of the content owner or distributor.

Content creators and artists often want substantial control over the presentation of their works to an audience. An artist may want to specify how his or her content will look or sound when played by a user. However, since player applications are currently distinct from the content itself, and are usually distributed separately, the number of customization features available to content owners is very limited.

To combat content piracy, a variety of content encryption schemes have been developed. One such system is the Content Scrambling System (CSS) for DVDs, commercially available from companies such as IBM Corporation and Intel Corporation. A CSS module provides a tamper-resistant copy protection feature to enable secure playback of encrypted content. Currently, these protection mechanisms are built into DVD players. However, once the security of a player has been broken, all content encoded using a particular content protection scheme is susceptible to attack.

WO97/02552 discloses automatic playback of multimedia from a CD-ROM by the use of an autostart driver. When a CD is inserted, the autostart driver checks it for a security key which is compared with a key hardcoded in the driver. If the key is valid, the driver starts a BAT-file on the CD which loads and starts an application from the CD. The application retrieves and renders multimedia information from the CD. When the CD is ejected, the application is stopped.

Therefore, there is a need for a way to securely and automatically render digital multimedia content such that these and other disadvantages are overcome.

### SUMMARY

According to a first aspect of this invention there is provided a method as claimed in claim 1 herein.

According to a second aspect of this invention there is provided a processing system as claimed in claim 8 herein.

According to a third aspect of this invention there is provided a computer program as claimed in claim 15 herein.

An embodiment of the present invention is a method of secure automatic playback of digital multimedia content stored on a removable storage medium such as a DVD. The method includes retrieving a player application, an access module, and an auto-installer script from the removable storage medium, automatically executing the auto-installer script to load the access module and the player application into a memory of a processing system, and executing the access module and the player application by the processing system to securely access the digital multimedia content from the removable storage medium and render the content for a user.

Another embodiment of the present invention includes a processing system for secure automatic playback of digital multimedia content stored on a removable storage medium, such as a DVD. The system includes a player application to render the digital multimedia content for a user, an access module to control access to the digital multimedia content, and an auto-installer script to automatically load the access module and the player application from the removable storage medium into a memory of the processing system and commence execution of the player application and the access module to render the content.

Other embodiments are described and claimed.

### BRIEF DESCRIPTION OF THE DRAWINGS

The features and advantages of the present invention will become apparent from the following detailed description of the present invention in which:
Figure 1 is a diagram of a secure automatic playback system according to an embodiment of the present invention;
Figure 2 is a flow diagram illustrating the operation of a secure automatic playback system according to an embodiment of the present invention; and
Figure 3 is a diagram illustrating a sample processing system capable of being operated as a secure automatic playback system according to an embodiment of the present invention.

### DETAILED DESCRIPTION

An embodiment of the present invention is a secure automatic playback system and method for removable mass storage media. The invention describes a method for bundling a player application with the content and how that player may be used to securely and automatically render the content on a PC or other device.

Reference in the specification to "one embodiment" or "an embodiment" of the present invention means that a particular feature, structure or characteristic described in connection with the embodiment is included in at least one embodiment of the present invention. Thus, the appearances of the phrase "in one embodiment" appearing in various places throughout the specification are not necessarily all referring to the same embodiment.

In one embodiment, the invention may be used for playing DVD-Audio disks, although in other embodiments, the method and system of the present invention may be used with any digital multimedia content encoded on any mass storage medium now known or hereafter developed. DVD-Audio is a separate format from the well-known DVD-Video used for motion pictures and other audio-visual content. DVD-Audio is defined in the DVD-Audio 1.0 specification published in March, 1999, and available from the DVD Forum, an industry consortium (see http://www.dvdforum.org on the Internet). The audio specification includes formats and features not available in the DVD-Video format, with content stored in a separate "DVD-Audio zone" on a disk. DVD-Audio supports linear pulse code modulation (LPCM) audio data, with up to six channels at sample rates of up to 96 kHz, and sample sizes of up to 24 bits. This allows a frequency response of up to 96 kHz and dynamic range of up to 144 decibels (dBs). Multichannel PCM data may be downmixed by a player application. Sampling rates and sizes may vary for different channels by using a predefined set of groups. The maximum data rate is 9.6 Mbps. DVD-Audio uses a Meridian Lossless Packing (MLP) compression scheme to remove redundancy from the signal to achieve a compression ratio of about 2:1 while allowing the PCM signal to be completely recreated by a MLP decoder. MLP allows playing time of about 74-135 minutes of six channel 96 kHZ/24 bit audio on a single layer of a disk.

DVD-Audio includes specialized downmixing features for PCM channels. Unlike DVD-Video, where a decoder controls mixing six channels down to two, DVD-Audio includes coefficient tables to control mixdown and avoid volume buildup from channel aggregation. Up to 16 tables may be defined by each audio title set (e.g., an album), and each track may be identified with a table. Coefficients may range from 0 dB to 60 dB. DVD-Audio allows up to 16 still graphics per track, with a set of limited transitions. On-screen displays may be used for display of synchronized lyrics and navigation menus.

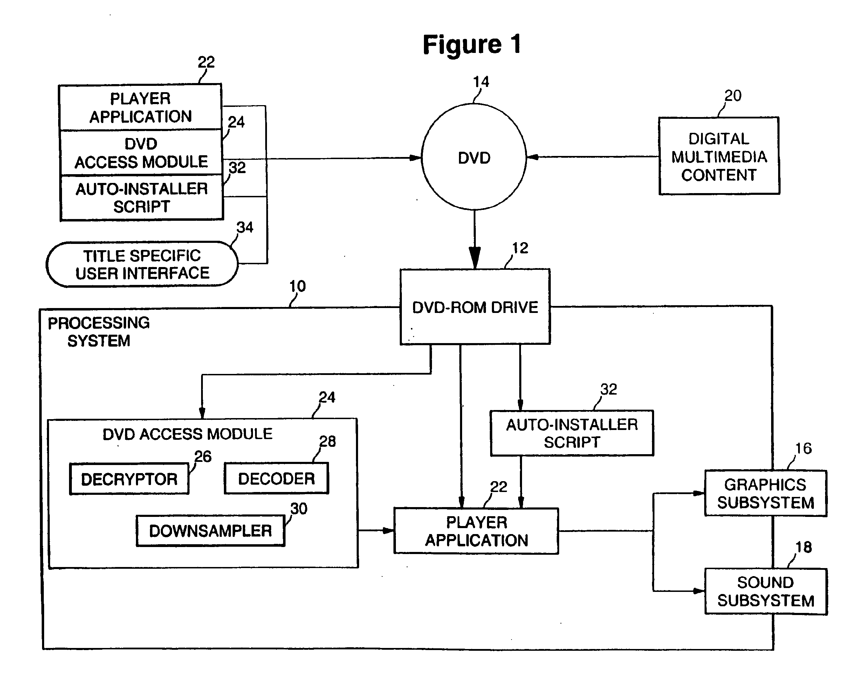

Because of the extended storage capacities and other features of DVD-Audio formatted media described above, new capabilities may be provided to content owners and users. Figure 1 is a diagram of a secure automatic playback system according to an embodiment of the present invention. A processing system 10 includes a DVD-ROM drive 12. The processing system may be a personal computer (PC) system, for example. DVD-ROM drive 12 is capable of reading data from a digital versatile disk (DVD) 14 and communicating the data to other components in the system. In one embodiment, the DVD includes data formatted according to the DVD-Audio specification. The processing system includes well-known graphics subsystem 16 for rendering images on a display (not shown) coupled to the system, and well-known sound subsystem 18 for producing sounds through loudspeakers (not shown) coupled to the system. Graphics subsystem and sound subsystem perform their conventional functions that are well known in the art, and thus will not be described further herein.

DVD 14 includes digital multimedia content 20. Digital multimedia content comprises one or more of audio content, video content, textual data, images, and other binary data. This content is written to the DVD in the typical manner during the manufacturing process. In embodiments of the present invention, DVD 14 also contains various other software and data. Player application 22 comprises software that accepts audio and visual data and causes this data to be rendered by the graphics and sound subsystems. Because in the present invention the player application is bundled with the content and the content owner controls this bundling, the player application may enforce selected content protection rules (e.g., no copies). In one embodiment, the player application is made tamper resistant according to known tamper resistant technologies to prevent unauthorized access to the code within. DVD access module 24 comprises software to control access to the data stored on the DVD. In one embodiment, the DVD access module is made tamper resistant according to known tamper resistant technologies to prevent unauthorized access to the code within. In one embodiment, the DVD access module uses the Content Scrambling System 2 content protection system now under development. Using tamper resistant techniques, the module can be made to work only with the player application bundled with the content on DVD 14. In one embodiment, a distinct version of the DVD access module may be used with each individual DVD title (wherein a title is an individual work comprising digital content). Thus, different security measures may be used for each title. One advantage of this feature is that compromise of the security of one access module does not compromise the security of all titles.

DVD access module 24 comprises at least three components. Decryptor 26 obtains encrypted data from DVD-ROM drive 12, checks the copy control information embedded within the data to verify that playback is authorized, and uses cryptographic keys stored in the DVD to decrypt the encrypted data. Decoder 28 decompresses the decrypted data and decodes the data into high fidelity LPCM format. Downsampler 30 converts the LPCM data into a lower fidelity PCM format suitable for processing by the sound subsystem of the processing system. In one embodiment, the PC format is 2 channel LPCM and has a 48 kHz sample rate and a sample size of 16 bits.

Auto-installer script 32 is loaded from the DVD into a memory within the processing system and automatically executed to load, install and commence execution of the player application and the DVD access module. The auto-installer script may be identical to or similar to an "autorun.inf" file executed by some operating systems upon insertion of a CD-ROM or a DVD into an appropriate drive of a PC. Title specific user interface 34 comprises data and software that is specific to a given DVD title (e.g., a movie, album, game, etc.). The player application may use the title specific user interface to customize the presentation of the digital multimedia content to the user. For example, the title specific user interface may specify a different "look and feel" for the graphical user interface of the player application for each DVD or even each individual track on a DVD. In one embodiment, the title specific user interface comprises at least one graphical image file for display by the graphics subsystem for a particular DVD.

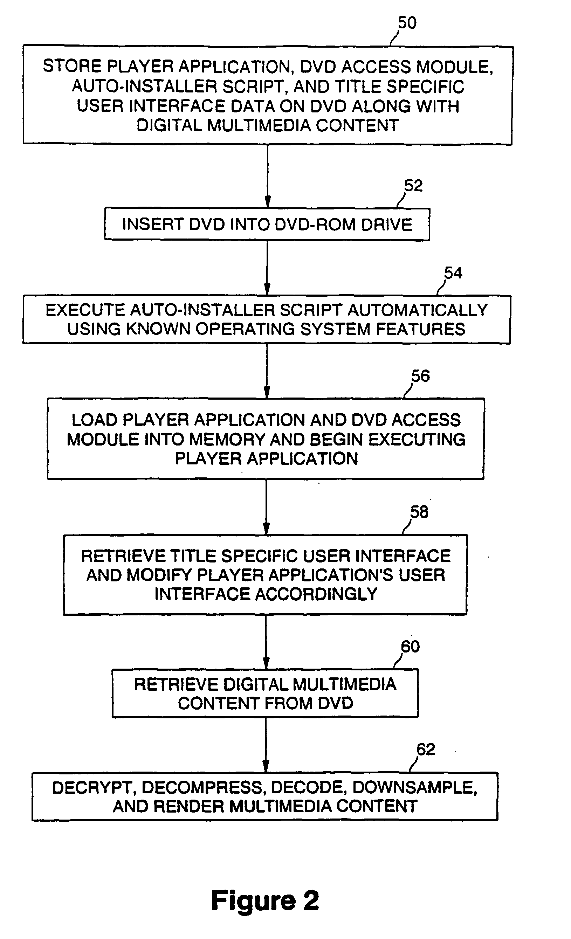

Figure 2 is a flow diagram illustrating the operation of a secure automatic playback system according to an embodiment of the present invention. At block 50, the player application, the DVD access module, the auto-installer script, and the title specific user interface information may be stored on the DVD along with the digital multimedia content. This action may be performed at the time of manufacturing of the DVD. The content owner or distributor may select an appropriate tamper resistant DVD access module and associated cryptographic keys to correlate with a particular version of a player application. The content owner may also modify the title specific user interface depending on artistic or marketing goals. Because of the large capacity of DVDs, these extra components may be stored on the disk along with the typical multimedia content. Once the DVD is physically distributed to a user (e.g., through a sales distribution channel), the user inserts the DVD into the DVD-ROM drive of the processing system at block 52.

Next, at block 54, once the DVD is in the DVD-ROM drive, the auto-installer script is read from the DVD and stored into a memory within the processing system. This script is automatically executed according to well-known operating system features. As the auto-installer script executes, it loads the player application and the tamper resistant DVD access module from the DVD into memory on the processing system at block 56. The player application begins executing. Note that no explicit installation of the player application, and no reinitialization or rebooting of the processing system is necessary. At block 58, the player application retrieves the title specific user interface information (if any), from the DVD and modifies the player's user interface accordingly for the title and/or track being played. Modification may include changing the visual display (e.g., the "skins") of the player as it appears to the user through the graphics subsystem. At block 60, the player application obtains the digital multimedia content from the DVD via the DVD access module. At block 62, the DVD access module decrypts, decodes, and downsamples the multimedia data. The resulting data may be passed to the player application for rendering on the graphics subsystem and the sound subsystem.

Embodiments of the present invention provide at least several advantages over existing systems. Playback of digital multimedia content is instantaneous without requiring installation of a player or other complex steps performed by a user. Thus, the end-user entertainment experience is greatly simplified and enhanced. The content owner has additional control over the presentation of the content to the end-user. All aspects of the user interface may be customized for the specific content. For example, the user interface elements may be modified for each film, artist, disk, or track. Since the player and all security components may be distributed with the content, the content owners may easily and quickly change the encryption keys, or even the entire content protection scheme that the content is protected with. This may be done periodically, randomly, or in response to a report of piracy of the content. This overcomes the current problem of having content owners wait until a new generation of player devices is distributed "out-of-band" to end-users in order to protect their content again.. In that case, it may be too late to counteract the piracy. The present invention overcomes this disadvantage of the prior art.

In the preceding description, various aspects of the present invention have been described. For purposes of explanation, specific numbers, systems and configurations were set forth in order to provide a thorough understanding of the present invention. However, it is apparent to one skilled in the art having the benefit of this disclosure that the present invention may be practiced without the specific details. In other instances, well-known features were omitted or simplified in order not to obscure the present invention.

Embodiments of the present invention may be implemented in hardware or software, or a combination of both. However, embodiments of the invention may be implemented as computer programs executing on programmable systems comprising at least one processor, a data storage system (including volatile and non-volatile memory and/or storage elements), at least one input device, and at least one output device. Program code may be applied to input data to perform the functions described herein and generate output information. The output information may be applied to one or more output devices, in known fashion. For purposes of this application, a processing system embodying the playback device components includes any system that has a processor, such as, for example, a digital signal processor (DSP), a microcontroller, an application specific integrated circuit (ASIC), or a microprocessor.

The programs may be implemented in a high level procedural or object oriented programming language to communicate with a processing system. The programs may also be implemented in assembly or machine language, if desired. In fact, the invention is not limited in scope to any particular programming language. In any case, the language may be a compiled or interpreted language.

The programs may be stored on a removable storage media or device (e.g., floppy disk drive, read only memory (ROM), CD-ROM device, flash memory device, digital versatile disk (DVD), or other storage device) readable by a general or special purpose programmable processing system, for configuring and operating the processing system when the storage media or device is read by the processing system to perform the procedures described herein. Embodiments of the invention may also be considered to be implemented as a machine-readable storage medium, configured for use with a processing system, where the storage medium so configured causes the processing system to operate in a specific and predefined manner to perform the functions described herein.

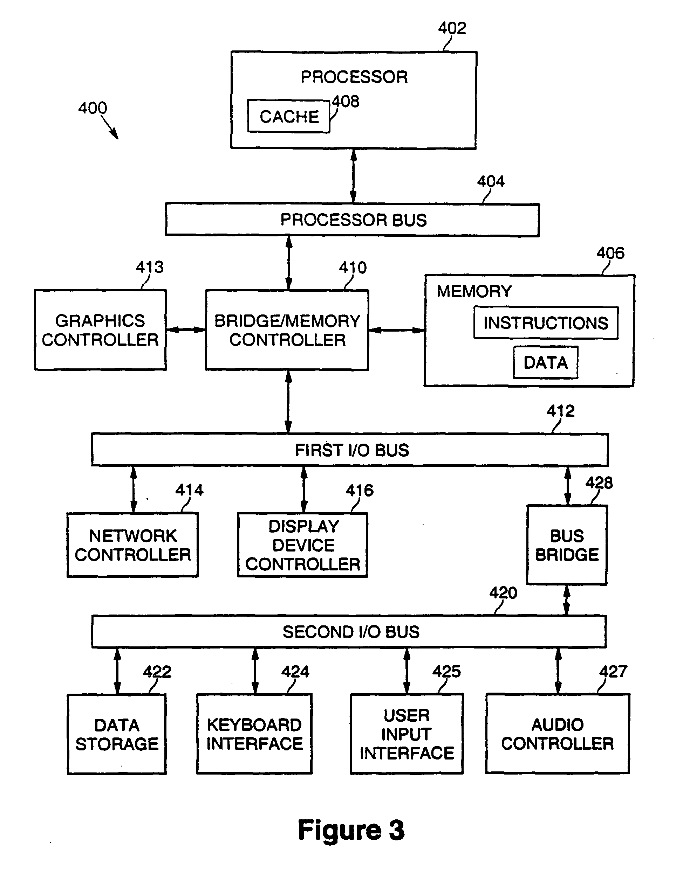

An example of one such type of processing system is shown in Figure 3, however, other systems may also be used and not all components of the system shown are required for the present invention. Sample system 400 may be used, for example, to execute the processing for embodiments of the secure automatic playback system, in accordance with the present invention, such as the embodiment described herein. Sample system 400 is representative of processing systems based on the PENTIUM®II, PENTIUM® III, and CELERON^{™} microprocessors available from Intel Corporation, although other systems (including personal computers (PCs) having other microprocessors, engineering workstations, other set-top boxes, and the like) and architectures may also be used.

Figure 3 is a block diagram of a system 400 of one embodiment of the present invention. The system 400 includes a processor 402 that processes data signals. Processor 402 may be coupled to a processor bus 404 that transmits data signals between processor 402 and other components in the system 400.

System 400 includes a memory 406. Memory 406 may store instructions and/or data represented by data signals that may be executed by processor 402. The instructions and/or data may comprise code for performing any and/or all of the techniques of the present invention. Memory 406 may also contain additional software and/or data (not shown). A cache memory 408 may reside inside processor 402 that stores data signals stored in memory 406.

A bridge/memory controller 410 may be coupled to the processor bus 404 and memory 406. The bridge/memory controller 410 directs data signals between processor 402, memory 406, and other components in the system 400 and bridges the data signals between processor bus 404, memory 406, and a first input/output (I/O) bus 412. In this embodiment, graphics controller 413 interfaces to a display device (not shown) for displaying images rendered or otherwise processed by the graphics controller 413 to a user.

First I/O bus 412 may comprise a single bus or a combination of multiple buses. First I/O bus 412 provides communication links between components in system 400. A network controller 414 may be coupled to the first I/O bus 412. In some embodiments, a display device controller 416 may be coupled to the first I/O bus 412. The display device controller 416 allows coupling of a display device to system 400 and acts as an interface between a display device (not shown) and the system. The display device receives data signals from processor 402 through display device controller 416 and displays information contained in the data signals to a user of system 400.

A second I/O bus 420 may comprise a single bus or a combination of multiple buses. The second I/O bus 420 provides communication links between components in system 400. A data storage device 422 may be coupled to the second I/O bus 420. A keyboard interface 424 may be coupled to the second I/O bus 420. A user input interface 425 may be coupled to the second I/O bus 420. The user input interface may be coupled to a user input device, such as a remote control, mouse, joystick, or trackball, for example, to provide input data to the computer system. An audio controller 427 may be coupled to the second I/O bus for handling processing of audio signals through one or more loudspeakers (not shown). A bus bridge 428 couples first I/O bridge 412 to second I/O bridge 420.

Embodiments of the present invention are related to the use of the system 400 as a secure automatic playback device. According to one embodiment, such processing may be performed by the system 400 in response to processor 402 executing sequences of instructions in memory 404. Such instructions may be read into memory 404 from another computer-readable medium, such as data storage device 422, or from another source via the network controller 414, for example. Execution of the sequences of instructions causes processor 402 to execute content playback processing according to embodiments of the present invention. In an alternative embodiment, hardware circuitry may be used in place of or in combination with software instructions to implement embodiments of the present invention. Thus, the present invention is not limited to any specific combination of hardware circuitry and software.

The elements of system 400 perform their conventional functions in a manner well-known in the art. In particular, data storage device 422 (e.g., a DVD) may be used to provide long-term storage for the executable instructions and data structures for embodiments of secure automatic playback system in accordance with the present invention, whereas memory 406 is used to store on a shorter term basis the executable instructions of embodiments of the secure automatic playback system in accordance with the present invention during execution by processor 402.

While this invention has been described with reference to illustrative embodiments, this description is not intended to be construed in a limiting sense. Various modifications of the illustrative embodiments, as well as other embodiments of the invention, which are apparent to persons skilled in the art to which the inventions pertains are deemed to lie within the scope of the invention.

## Claims

1. A method of secure automatic playback of digital multimedia content (20) stored on a removable storage medium (14) comprising:
retrieving a player application (22), a tamper-resistant access module (24) that is distinct for a title of digital multimedia content, and an auto-installer script (32), all separate components but bundled together with the content on the removable storage medium;
automatically executing the auto-installer script to load the tamper-resistant access module and the player application from the removable storage medium into a memory (406) of a processing system (400);
executing the tamper-resistant access module by the processing system to allow access to the digital multimedia content by the player application retrieved from the removable storage medium, wherein executing the tamper-resistant access module includes
decrypting (26) the digital multimedia content to produce decrypted content,
decoding (28) the decrypted content to produce decoded content, and
downsampling (30) the decoded content to produce data for rendering;
and
rendering (22) the data for a user by executing the player application retrieved from the removable storage medium only when access is enabled by the tamper-resistant access module.

2. The method of claim 1, wherein the removable storage medium comprises a digital versatile disk (DVD).

3. The method of claim 1 or 2, wherein the tamper-resistant access module uses cryptographic keys stored on the removable storage medium to allow the player application to access the digital multimedia content, the cryptographic keys being distinct for at least one of a title and a track of digital multimedia content.

4. The method of claim 1, wherein the removable storage medium comprises a digital versatile disk (DVD) and the digital multimedia content comprises audio data stored in a DVD-Audio format.

5. The method of any preceding claim, further comprising retrieving title specific user interface information provided by a content owner from the removable storage medium and customizing rendering of the digital multimedia content by the player application according to parameters specified in the title specific user interface information.

6. The method of claim 3, wherein an owner of the content selects the distinct access module and the distinct cryptographic keys for a content title.

7. The method of claim 6, wherein the content owner changes the cryptographic keys at least one of periodically and randomly prior to distribution of the removable storage medium.

8. A processing system for secure automatic playback of digital multimedia content stored on a removable storage medium (14), comprising:
a player application (22) to render the digital multimedia content for a user, the player application bundled with the content on the removable storage medium;
a tamper-resistant access module (24), which is distinct for a title of digital multimedia content, to control access to the digital multimedia content, the tamper-resistant access module separate from the player application but both bundled with the content on the removable storage medium, and the tamper-resistant access module includes
a decryptor (26) to decrypt the digital multimedia content to produce decrypted content,
a decoder (28) to decode the decrypted content to produce decoded content, and
a downsampler (30) to downsample the decoded content to produce data for rendering;
an auto-installer script (32) to automatically load the tamper-resistant access module and the player application from the removable storage medium into a memory (406) of the processing system and commence execution of the tamper-resistant access module to allow access to the content by the player application from the removable storage medium; and
wherein the player application renders the data only when access is enabled by the tamper-resistant access module.

9. The system of claim 8, wherein the processing system comprises a DVD-ROM drive and the removable storage medium comprises a digital versatile disk (DVD).

10. The system of claim 8 or 9, wherein the tamper-resistant access module uses cryptographic keys stored on the removable storage medium to allow the player application to access the digital multimedia content, the cryptographic keys being distinct for at least one of a title and a track of digital multimedia content.

11. The system of claim 8 or 9, wherein the removable storage medium comprises a digital versatile disk (DVD) and the digital multimedia content comprises audio data stored in a DVD-Audio format.

12. The system of any of claims 8-11, further comprising title specific user interface information provided by a content owner retrieved from the removable storage medium, the player application comprising means for customizing rendering of the digital multimedia content according to parameters specified in the title specific user interface information.

13. The system of claim 10, wherein an owner of the content selects the distinct access module and the distinct cryptographic keys for a content title.

14. The system of claim 13, wherein the content owner changes the cryptographic keys at least one of periodically and randomly prior to distribution of the removable storage medium.

15. A computer program comprising computer program code means adapted to perform all the steps of claim 1 or 3 or 5 when run on a computer.

16. A computer program as claimed in claim 15 when embodied on a computer readable medium.

17. A computer program as claimed in claim 16, wherein said computer readable medium is a digital versatile disk (DVD) and the digital multimedia content comprises audio data stored in a DVD-Audio format.

## Patentansprüche

1. Verfahren zur sicheren automatischen Wiedergabe von digitalem Multimediainhalt (20), der auf einem entfernbaren Speichermedium (14) gespeichert ist, wobei das Verfahren folgendes umfasst:
das Abrufen einer Player-Anwendung (22), eines manipulationssicheren Zugriffsmoduls (24), das für einen Titel von digitalem Multimediainhalt charakteristisch ist, und eines Autoinstaller-Skripts (32), die alle separate Komponenten darstellen, die mit dem Inhalt auf dem entfernbaren Speichermedium gebündelt sind;
das automatische Ausführen des Autoinstaller-Skripts zum Laden des manipulationssicheren Zugriffsmoduls und der Player-Anwendung von dem entfernbaren Speichermedium in einen Speicher (406) eines Verarbeitungssystems (400);
das Ausführen des manipulationssicheren Zugriffsmoduls durch das Verarbeitungssystem, um den Zugriff auf den digitalen Multimediainhalt durch die von dem entfernbaren Speichermedium abgerufene Player-Anwendung zu ermöglichen, wobei das Ausführen des manipulationssicheren Zugriffsmoduls folgendes aufweist:
das Entschlüsseln (26) des digitalen Multimediainhalts zur Erzeugung von entschlüsseltem Inhalt;
das Decodieren (28) des entschlüsselten Inhalts zum Erzeugen von decodiertem Inhalt; und
das Heruntertakten (30) des decodierten Inhalts zum Erzeugen von Daten zur Widergabe; und
das Wiedergeben (22) der Daten für einen Benutzer durch Ausführen der von dem entfernbaren Speichermedium abgerufenen Player-Anwendung, nur wenn der Zugriff durch das manipulationssichere Zugriffsmodul freigegeben wird.

2. Verfahren nach Anspruch 1, wobei das entfernbare Speichermedium eine Digital Versatile Disk (DVD) umfasst.

3. Verfahren nach Anspruch 1 oder 2, wobei das manipulationssichere Zugriffsmodul kryptografische Schlüssel verwendet, die auf dem entfernbaren Speichermedium gespeichert sind, um es zu ermöglichen, dass die Player-Anwendung auf den digitalen Multimedia-Inhalt zugreift, wobei die kryptografischen Schlüssel charakteristisch sind für mindestens einen Titel oder ein Stück digitalen Multimediainhalts.

4. Verfahren nach Anspruch 1, wobei das entfernbare Speichermedium eine Digital Versatile Disk (DVD) umfasst, und wobei der digitale Multimediainhalt Audiodaten umfasst, die in einem DVD-Audioformat gespeichert sind.

5. Verfahren nach einem der vorstehenden Ansprüche, wobei das Verfahren ferner das Abrufen von titelspezifischen Benutzerschnittstelleninformationen umfasst, die durch einen Eigentümer des Inhalts von dem entfernbaren Speichermedium bereitgestellt werden, und die individuelle Wiedergabe von digitalem Multimediainhalt durch die Player-Anwendung gemäß Parametern, die in den titelspezifischen Benutzerschnittstelleninformationen spezifiziert sind.

6. Verfahren nach Anspruch 3, wobei ein Eigentümer des Inhalts das charakteristische Zugriffsmodul auswählt sowie die charakteristischen Schlüssel für einen Inhaltstitel.

7. Verfahren nach Anspruch 6, wobei der Inhaltseigentümer die kryptografischen Schlüssel mindestens periodisch oder wahlfrei vor der Distribution des entfernbaren Speichermediums verändert.

8. Verarbeitungssystem für die sichere automatische Wiedergabe von digitalem Multimediainhalt, der auf einem entfernbaren Speichermedium (14) gespeichert ist, wobei das System folgendes umfasst:
eine Player-Anwendung (22) zur Wiedergabe von digitalem Multimediainhalt an einen Benutzer, wobei die Player-Anwendung mit dem Inhalt auf dem entfernbaren Speichermedium gebündelt ist;
ein manipulationssicheres Zugriffsmoduls (24), das für einen Titel von digitalem Multimediainhalt charakteristisch ist, um den Zugriff auf den digitalen Multimediainhalt zu steuern, wobei das manipulationssichere Zugriffsmodul von der Player-Anwendung getrennt ist, wobei jedoch beide gebündelt sind mit dem Inhalt auf dem entfernbaren Speichermedium, und wobei das manipulationssichere Zugriffsmodul folgendes aufweist:
eine Entschlüsselungseinrichtung (26) zum Entschlüsseln des digitalen Multimediainhalts zum Erzeugen von entschlüsseltem Inhalt;
einen Decodierer (28) zum Decodieren des entschlüsselten Inhalts zum Erzeugen von decodiertem Inhalt; und
eine Heruntertaktungseinrichtung (30) zum Heruntertakten des decodierten Inhalts zum Erzeugen von Daten zur Wiedergabe;
ein Autoinstaller-Skript (32) zum automatischen Laden des manipulationssicheren Zugriffsmoduls und der Player-Anwendung von dem entfernbaren Speichermedium in einen Speicher (406) des Verarbeitungssystems, und zum Starten der Ausführung des manipulationssicheren Zugriffsmoduls, um den Zugriff auf den Inhalt durch die Player-Anwendung von dem entfernbaren Speichermedium zu ermöglichen; und
wobei die Player-Anwendung die Daten zur wiedergibt, wenn der Zugriff durch das manipulationssichere Zugriffsmodul freigegeben ist.

9. System nach Anspruch 8, wobei das Verarbeitungssystem ein DVD-ROM-Laufwerk umfasst, und wobei das entfernbare Speichermedium eine Digital Versatile Disk (DVD) umfasst.

10. System nach Anspruch 8 oder 9, wobei das manipulationssichere Zugriffsmodul kryptografische Schlüssel verwendet, die auf dem entfernbaren Speichermedium gespeichert sind, um es zu ermöglichen, dass die Player-Anwendung auf den digitalen Multimediainhalt zugreift, wobei die kryptografischen Schlüssel charakteristisch sind für mindestens einen Titel oder ein Stück des digitalen Multimediainhalts.

11. System nach Anspruch 8 oder 9, wobei das entfernbare Speichermedium eine Digital Versatile Disk (DVD) umfasst, und wobei der digitale Multimediainhalt Audiodaten umfasst, die in einem DVD-Audioformat gespeichert sind.

12. System nach einem der Ansprüche 8 bis 11, wobei dieses ferner titelspezifische Benutzerschnittstelleninformationen umfasst, die durch einen Inhaltseigentümer von dem entfernbaren Speichermedium bereitgestellt werden, wobei die Player-Anwendung eine Einrichtung zur individuellen Wiedergabe des digitalen Multimediainhalts gemäß Parametern umfasst, die in den titelspezifischen Benutzerschnittstelleninformationen spezifiziert sind.

13. System nach Anspruch 10, wobei ein Eigentümer des Inhalts das charakteristische Zugriffsmodul und die charakteristischen Schlüssel für einen Inhaltstitel auswählt.

14. System nach Anspruch 13, wobei der Inhaltseigentümer die kryptografischen Schlüssel zumindest periodisch oder wahlfrei vor der Distribution des entfernbaren Speichermediums verändert.

15. Computerprogramm, das eine Computerprogrammcodeeinrichtung umfasst, die in der Lage ist, alle Schritte aus Anspruch 1 oder 3 oder 5 auszuführen, wenn es auf einem Computer ausgeführt wird.

16. Computerprogramm nach Anspruch 15 in einer Ausführung auf einem computerlesbaren Medium.

17. Computerprogramm nach Anspruch 16, wobei es sich bei dem genannten computerlesbaren Medium um eine Digital Versatile Disk (DVD) handelt, und wobei der digitale Multimediainhalt Audiodaten umfasst, die in einem DVD-Audioformat gespeichert sind.

## Revendications

1. Procédé de lecture automatique sécurisée de contenu multimédia numérique (20) stocké sur un support de mémoire amovible (14) comprenant les étapes consistant à :
récupérer une application de lecteur (22), un module d'accès inviolable (24) qui est distinct pour un titre de contenu multimédia numérique, et un script d'installation automatique (32), tous étant des composants séparés réunis avec le contenu sur le support de mémoire amovible ;
exécuter automatiquement le script d'installation automatique pour charger le module d'accès inviolable et l'application de lecteur depuis le support de mémoire amovible dans une mémoire (406) d'un système de traitement (400) ;
exécuter le module d'accès inviolable par le système de traitement pour permettre l'accès au contenu multimédia numérique par l'application de lecteur récupérée du support de mémoire amovible, dans lequel l'exécution du module d'accès inviolable inclut les étapes consistant à :
décrypter (26) le contenu multimédia numérique pour produire un contenu décrypté,
décoder (28) le contenu décrypté pour produire du contenu décodé, et
sous-échantillonner (30) le contenu décodé pour produire des données pour le rendu ; et
rendre (22) les données pour un utilisateur en exécutant l'application de lecteur récupérée du support de mémoire amovible uniquement lorsque l'accès est permis par le module d'accès inviolable.

2. Procédé selon la revendication 1, dans lequel le support de mémoire amovible comprend un disque numérique polyvalent (en anglais « Digital Versatile Disk » - DVD).

3. Procédé selon la revendication 1 ou 2, dans lequel le module d'accès inviolable utilise des clés cryptographiques stockées sur le support de mémoire amovible pour permettre à l'application de lecteur d'accéder au contenu multimédia numérique, les clés cryptographiques étant distinctes pour au moins l'un d'un titre et d'une piste de contenu multimédia numérique.

4. Procédé selon la revendication 1, dans lequel le support de mémoire amovible comprend un disque numérique polyvalent (en anglais « Digital Versatile Disk » - DVD) et le contenu multimédia numérique comprend des données audio stockées dans un format DVD-Audio.

5. Procédé selon l'une quelconque des revendications précédentes, comprenant en outre les étapes consistant à récupérer des informations d'interface utilisateur spécifiques au titre fournies par un propriétaire de contenu depuis le support de mémoire amovible et personnaliser le rendu du contenu multimédia numérique par l'application de lecteur selon les paramètres spécifiés dans les informations d'interface utilisateur spécifiques au titre.

6. Procédé selon la revendication 3, dans lequel un propriétaire du contenu sélectionne le module d'accès distinct et les clés crytographiques distinctes pour un titre de contenu.

7. Procédé selon la revendication 6, dans lequel le propriétaire du contenu change les clés cryptographiques au moins périodiquement ou aléatoirement avant la distribution du support de mémoire amovible.

8. Système de traitement pour la lecture automatique sécurisée de contenu multimédia numérique stocké sur un support de mémoire amovible (14), comprenant :
une application de lecteur (22) pour rendre le contenu multimédia numérique pour un utilisateur, l'application de lecteur étant associée au contenu sur le support de mémoire amovible ;
un module d'accès inviolable (24), qui est distinct pour un titre de contenu multimédia numérique, pour commander l'accès au contenu multimédia numérique, le module d'accès inviolable étant séparé de l'application de lecteur mais tous les deux étant associés au contenu sur le support de mémoire amovible, et le module d'accès inviolable comprend
un décrypteur (26) pour décrypter le contenu multimédia numérique pour produire un contenu décrypté,
un décodeur (28) pour décoder le contenu décrypté pour produire du contenu décodé, et
un sous-échantillonneur (30) pour sous-échantillonner le contenu décodé pour produire des données pour le rendu ;
un script d'installation automatique (32) pour charger automatiquement le module d'accès inviolable et l'application de lecteur depuis le support de mémoire amovible dans une mémoire (406) du système de traitement et commencer l'exécution du module d'accès inviolable pour permettre l'accès au contenu par l'application de lecteur depuis le support de mémoire amovible ; et
dans lequel l'application de lecteur rend les données uniquement lorsque l'accès est permis par le module d'accès inviolable.

9. Système selon la revendication 8, dans lequel le système de traitement comprend un lecteur de DVD-ROM et le support de mémoire amovible comprend un disque numérique polyvalent (en anglais « Digital Versatile Disk » - DVD).

10. Système selon la revendication 8 ou 9, dans lequel le module d'accès inviolable utilise des clés cryptographiques stockées sur le support de mémoire amovible pour permettre à l'application de lecteur d'accéder au contenu multimédia numérique, les clés cryptographiques étant distinctes pour au moins l'un d'un titre et d'une piste de contenu multimédia numérique.

11. Système selon la revendication 8 ou 9, dans lequel le support de mémoire amovible comprend un disque numérique polyvalent (en anglais « Digital Versatile Disk » - DVD) et le contenu multimédia numérique comprend des données audio stockées dans un format DVD-Audio.

12. Système selon l'une quelconque des revendications 8 à 11, comprenant en outre des informations d'interface utilisateur spécifiques au titre fournies par un propriétaire de contenu récupérées depuis le support de mémoire amovible, l'application de lecteur comprenant des moyens pour personnaliser le rendu du contenu multimédia numérique selon les paramètres spécifiés dans les informations d'interface utilisateur spécifiques au titre.

13. Système selon la revendication 10, dans lequel un propriétaire du contenu sélectionne le module d'accès distinct et les clés cryptographiques distinctes pour un titre de contenu.

14. Système selon la revendication 13, dans lequel un propriétaire du contenu change les clés cryptographiques au moins périodiquement ou aléatoirement avant la distribution du support de mémoire amovible.

15. Programme informatique comprenant des moyens de code de programme informatique adaptés pour effectuer toutes les étapes de la revendication 1, 3 ou 5 en cas d'exécution sur un ordinateur.

16. Programme informatique selon la revendication 15, intégré à un support lisible par ordinateur.

17. Programme informatique selon la revendication 16, dans lequel ledit support lisible par ordinateur est un disque numérique polyvalent (en anglais « Digital Versatile Disk » - DVD) et le contenu multimédia numérique comprend des données audio stockées dans un format DVD-Audio.
